# FASCICULE DE BREVET EUROPEEN

(11) **EP 1 965 041 B1**
(45) Date de publication et mention de la délivrance du brevet: **21.04.2010**
(21) Numéro de dépôt: 08151973.8
(22) Date de dépôt: 27.02.2008
(51) Int. Cl.: F01D 25/18, B01D 45/14, F01M 13/04

(54) **Système de déshuilage pour moteur d`aéronef**
Ölabscheidesystem für Flugzeugmotor
Deoiling system for an aircraft engine

(30) Priorité: 27.02.2007 FR 0753515
(43) Date de publication de la demande: 03.09.2008
(73) Titulaire: SNECMA, 75015 Paris (FR)
(72) Inventeur: Earith, Thomas, 77250 Veneux Les Sablons (FR); Gauthier, Gérard, 77430 Champagne Sur Seine (FR); Morreale, Serge, 77390 Guignes (FR)
(74) Mandataire: Dronne, Guy

(56) Documents cités:
- EP-A- 1 728 975
- EP-A1- 0 780 546
- EP-A1- 1 344 559
- FR-A1- 2 696 655
- US-A- 5 114 446
- US-A- 6 033 450

## Description

La présente invention a pour objet un système de déshuilage pour moteur d'aéronef et un moteur d'aéronef comportant un tel système de déshuilage. Dans un moteur d'aéronef et notamment dans un turbo-réacteur, il est organisé une circulation d'huile vers certains composants, notamment pour réaliser les fonctions de lubrification. Cette huile après avoir été introduite dans les organes où la lubrification doit être réalisée est récupérée pour être finalement recyclée et donc réinjectée à nouveau dans les circuits de lubrification.

Cependant les circuits de lubrification ne sont pas complètement étanches, il existe des pertes qui définissent la consommation d'huile du moteur.

La principale source de fuite d'huile se trouve être le système de déshuilage de l'air des enceintes moteurs dans les enceintes paliers avant et palier arrière du moteur : il y a des circulations d'air vers les enceintes palier entre pièces tournantes et fixes, cet air se charge d'huile et est ensuite évacué vers l'extérieur à travers un système de déshuilage. Augmenter le pouvoir de séparation entre l'air et l'huile du système de déshuilage permet de baisser la consommation d'huile du moteur ou du turboréacteur et ainsi d'en réduire le coût de fonctionnement.

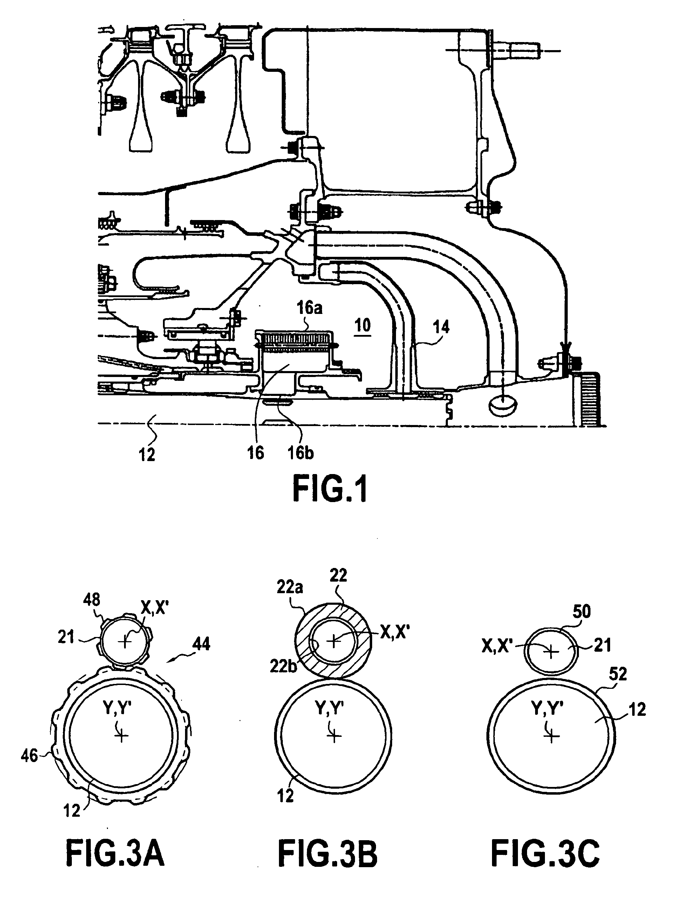

Sur la figure 1 annexée on a représenté un exemple de système de déshuilage connu monté dans l'enceinte palier arrière d'un turboréacteur. Sur cette figure, on a représenté l'enceinte palier arrière 10 et le tube rotatif creux de récupération de gaz 12 venant de l'enceinte palier avant. On a également représenté les tubes de pressurisation 14 qui permettent d'injecter dans l'enceinte 10 de l'air pour éviter l'entrée de fluide dans l'enceinte.

Le déshuilage proprement dit est obtenu à l'aide d'un déshuileur centrifuge 16 de forme annulaire qui est monté sur le tube de dégazage axial 12. La face d'entrée 16a du déshuileur 16 est au contact de l'air chargé en huile contenu dans l'enceinte 10 alors que sa sortie 16b communique avec le tube axial de dégazage 12. Le déshuileur centrifuge 16 est solidaire en rotation du tube 12. Le déshuileur 16 est, de façon simplifiée, constitué par une pluralité de micro-canaux, par exemple constitué par une structure en nid d'abeilles, dont les bords de la face d'entrée 16a ont tendance à écarter les gouttelettes d'huile qui sont renvoyées vers l'enceinte 10 sous l'effet de la rotation du déshuileur et à laisser passer l'air vers le tube de dégazage 12 sous l'effet de la pression régnant dans l'enceinte 10. On obtient ainsi une séparation de l'huile par rapport à l'air, l'huile étant récupérée par un circuit de pompage débouchant à la partie inférieure de l'enceinte 10, ce circuit n'étant pas représenté sur la figure 1.

Dans un tel système, la vitesse de rotation du déshuileur 16 est bien sûr imposée par la vitesse de rotation du tube de dégazage 12. Il s'avère qu'avec un tel système on obtient un taux de séparation de l'huile et de l'air qui est sensiblement inférieur à l'objectif visé, il en résulte une consommation d'huile accrue.

US 5 114 446 décrit un système de déshuilage avec les caractéristiques du préambule de la revendication 1.

D'autres exemples de systèmes de déshuilage selon l'art antérieur sont décrits dans EP 0 780 546 et FR 2 696 655.

Un objet de la présente invention est de fournir un système de déshuilage pour moteur d'aéronef qui permet d'améliorer le taux de recyclage de l'huile de lubrification, c'est-à-dire le taux de séparation de l'air et de l'huile, sans compliquer significativement la structure, par exemple, de l'enceinte palier arrière du moteur d'aéronef.

Pour atteindre ce but, selon l'invention, le système de déshuilage pour moteur d'aéronef comprenant un carter limitant un volume contenant un mélange d'air et d'huile à traiter et un arbre rotatif creux, se **caractérise en ce qu**'il comprend :
un axe creux rotatif distinct dudit arbre ;
une structure de déshuilage fixée sur ledit axe et solidaire en rotation dudit axe, ladite structure de déshuilage comprenant une première face d'entrée communiquant avec ledit volume et une deuxième face de sortie raccordée au passage ménagé dans ledit axe creux ; et
des moyens de transmission entre ledit axe creux et ledit arbre creux pour communiquer audit axe creux une vitesse V de rotation autour de son axe géométrique de telle manière que ladite vitesse de rotation V soit supérieure à la vitesse de rotation v dudit arbre rotatif, par quoi les gouttelettes d'huile contenues dans l'air à l'intérieur du carter sont écartées vers le carter de la face d'entrée de ladite structure de déshuilage et l'air traité est recueilli par ledit passage de l'axe creux rotatif.

On comprend que selon l'invention, la structure de déshuilage est entraînée à une vitesse de rotation qui n'est plus imposée par celle de l'arbre rotatif creux, c'est-à-dire l'arbre de dégazage, mais une vitesse de rotation qui peut être définie en choisissant un rapport entre la vitesse V et la vitesse v convenable pour optimiser le fonctionnement de la structure de déshuilage.

En outre, on voit que cette structure de déshuilage est certes une pièce additionnelle mais qui ne modifie pas l'organisation générale de l'enceinte palier qui constitue le plus souvent le carter dans lequel on procède au déshuilage.

De préférence, les axes géométriques de l'axe creux portant la structure de déshuilage et de l'arbre rotatif sont parallèles. Ainsi, la réalisation de la transmission est sensiblement simplifiée.

De préférence, lesdits moyens de transmission comprennent un premier pignon monté sur ledit axe creux coopérant avec un deuxième pignon monté sur ledit arbre rotatif.

De préférence également, ledit axe creux traverse la paroi dudit carter et un joint du type labyrinthe est interposé entre ledit axe creux et la paroi dudit carter.

De préférence encore, des paliers solidaires de la paroi du carter sont prévus, dans lesquels ledit axe creux est monté pour permettre son centrage.

De préférence également, la structure de déshuilage est du type à mousse métallique.

Un deuxième objet de l'invention est de fournir un moteur d'aéronef ou plus particulièrement un turboréacteur pour aéronef qui se **caractérise en ce que** son système de déshuilage est conforme aux caractéristiques énoncées ci-dessus, le système de déshuilage étant monté de préférence dans l'enceinte associée au palier arrière. Il peut également être éventuellement monté dans l'enceinte de palier avant ou encore dans les deux enceintes.

D'autres caractéristiques et avantages de l'invention apparaîtront mieux à la lecture de la description qui suit d'un mode préféré de réalisation de l'invention donné à titre d'exemple non limitatif. La description se réfère aux figures annexées sur lesquelles :
- la figure 1, déjà décrire, montre un système de déshuilage connu monté dans l'enceinte de palier arrière d'un turboréacteur ;
- la figure 2 est une vue en coupe axiale de l'enceinte de palier arrière d'un turboréacteur équipé du système de déshuilage conforme à l'invention ;
- la figure 3A est une vue en coupe transversale selon la ligne A-A de la figure 2 ;
- la figure 3B est une vue en coupe transversale selon la ligne B-B de la figure 2 ; et
- la figure 3C est une vue en coupe transversale selon la ligne C-C de la figure 2.

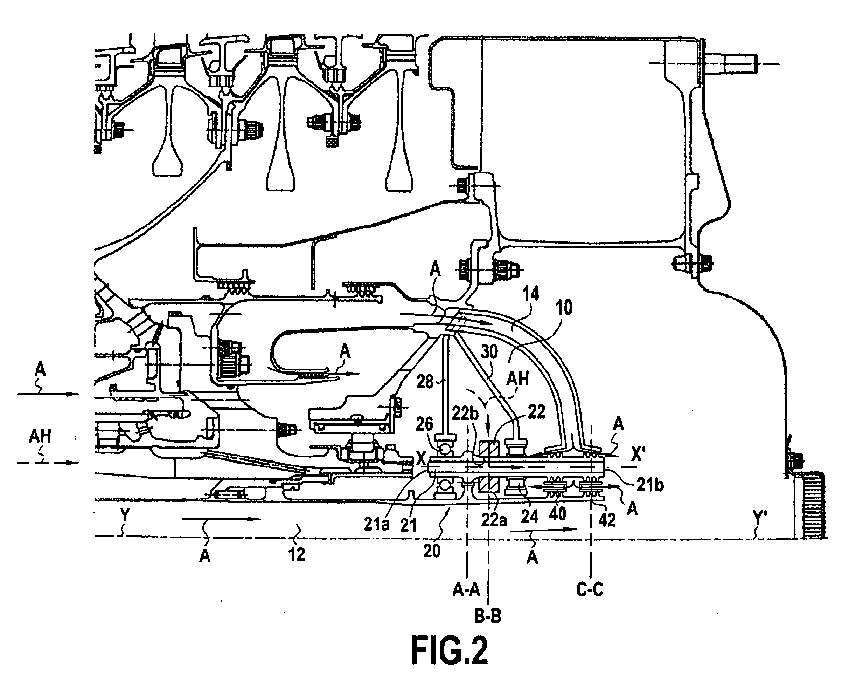

En se référant tout d'abord à la figure 2, on va décrire l'organisation générale de la structure de déshuilage conforme à l'invention, monté dans l'enceinte de palier arrière 10 d'un moteur d'aéronef ou plus précisément d'un turbo-réacteur. Sur cette figure, on a représenté à nouveau, outre l'enceinte 10, le tube axial creux rotatif de récupération de gaz 12 venant de l'enceinte de palier avant ainsi que la circulation de l'air représenté par les flèches A et la circulation du mélange air-huile représenté par les flèches AH.

La structure de déshuilage qui porte la référence générale 20 est constituée essentiellement par un axe rotatif creux 21 sur lequel est monté une structure de déshuilage centrifuge annulaire 22. L'axe creux 21 est, de préférence, monté de telle manière que son axe géométrique XX' soit parallèle à l'axe YY' du tube de dégazage 12. Cependant les axes géométriques pourraient ne pas être parallèles entre eux. L'axe creux 21 est monté dans deux séries de paliers 24 et 26 eux-mêmes montés dans des structures de maintien 28 et 30 solidaires de l'enceinte de paliers arrières. La structure annulaire de déshuilage 22 comporte une face d'entrée externe 22a qui est directement au contact du volume défini par l'enceinte de paliers arrières 10 et par une face interne de sortie 22b qui est reliée au passage 34 défini par l'axe creux 21. L'axe creux 21 comporte une première extrémité 21a qui est obturée et une deuxième extrémité 21b qui est ouverte et qui permet la récupération de l'air à la sortie de la structure de déshuilage 20. Pour assurer l'étanchéité par rapport au tube creux 21 des joints du type à labyrinthe 40 et 42 sont montés d'une part sur la face externe du tube 21 et d'autre part sur les conduites de pressurisation 14.

En se référant maintenant à la figure 3A, on va décrire un mode préféré de réalisation de la transmission mécanique entre l'arbre de récupération de gaz basse pression 12 et l'axe creux 21 de la structure de déshuilage 22. De préférence, ce système de transmission qui porte la référence générale 44 est constitué par deux pignons 46 et 48 montés respectivement sur les faces externes du tube de dégazage basse pression 12 et de l'axe creux 21 de la structure de déshuilage. On comprend que, en définissant convenablement les pignons 46 et 48, on peut donner à l'axe creux 21 une vitesse de rotation V, parfaitement définie et convenable pour optimiser l'opération de déshuilage, autour de son axe longitudinal XX'. Cette vitesse V est supérieure à la vitesse v de l'arbre creux 12.

Sur la figure 3B, on a représenté l'arbre basse pression 12, l'axe creux 21 et la structure annulaire centrifuge de déshuilage 22 avec sa face d'entrée 22a et sa face de sortie 22b.

Sur la figure 3C, on a représenté à nouveau le tube de dégazage basse pression 12, l'axe creux 21, ces deux arbres creux étant munis des "léchettes" 50 et 52 constituant les joints à labyrinthe 40 et plus précisément 42.

Dans la description précédente, la structure de déshuilage est montée dans l'enceinte de palier arrière, ce qui correspond à la solution économiquement optimale. Il va cependant de soi qu'une structure de déshuilage pourrait être montée dans l'enceinte de palier avant ou encore dans les deux enceintes.

## Revendications

1. Système de déshuilage (20) pour moteur d'aéronef comprenant un carter (10) limitant un volume contenant un mélange d'air et d'huile à traiter et un arbre rotatif (12), comprenant :
un axe creux (21) rotatif distinct dudit arbre ;
une structure de déshuilage fixée sur ledit axe et solidaire en rotation dudit axe, ladite structure (22) de déshuilage comprenant une première face d'entrée (22a) communiquant avec ledit volume et une deuxième face de sortie (22b) raccordée au passage ménagé dans ledit axe creux (21) ; et
des moyens de transmission (44) entre ledit axe creux (21) et ledit arbre (12) ;
ledit système de déshuilage étant **caractérisé en ce que** lesdits moyens de transmission (44) communiquent audit axe creux une vitesse V de rotation autour de son axe géométrique de telle manière que ladite vitesse de rotation V soit supérieure à la vitesse de rotation v dudit arbre rotatif, par quoi les gouttelettes d'huile contenues dans l'air à l'intérieur du carter sont écartées vers le carter de la face d'entrée de ladite structure de déshuilage et l'air traité est recueilli par ledit passage de l'axe creux rotatif.

2. Système de déshuilage selon la revendication 1, **caractérisé en ce que** les axes géométriques (XX', YY'), dudit axe creux (21), et dudit arbre rotatif (12) sont parallèles.

3. Système de déshuilage selon la revendication 2, **caractérisé en ce que** lesdits moyens de transmission comprennent un premier pignon (48) monté sur ledit axe creux (21) coopérant avec un deuxième pignon (46), monté sur ledit arbre rotatif (12).

4. Système de déshuilage selon l'une quelconque des revendications 1 à 3, **caractérisé en ce que** ledit axe creux (21) traverse la paroi dudit carter (10) et **en ce qu'**un joint (40, 42) du type labyrinthe est interposé entre ledit axe creux et la paroi dudit carter.

5. Système de déshuilage selon l'une quelconque des revendications 1 à 4, **caractérisé en ce qu'**il comprend en outre des paliers (24, 26) solidaires de la paroi du carter dans lesquels ledit axe creux (21) est monté à rotation.

6. Système de déshuilage selon l'une quelconque des revendications 1 à 5, **caractérisé en ce que** ladite structure de déshuilage (22) a la forme d'un manchon cylindrique dont la face d'entrée (22a) est sa face cylindrique externe et dont la face (22b) de sortie est sa face cylindrique interne.

7. Système de déshuilage selon l'une quelconque des revendications 1 à 6, **caractérisé en ce que** la structure de déshuilage (22) est du type à mousse métallique.

8. Moteur d'aéronef **caractérisé en ce qu'**il comprend un système de déshuilage selon l'une quelconque des revendications 1 à 7, monté dans l'enceinte associée aux paliers arrières et/ou avant.

## Claims

1. A de-oiler system (20) for an aircraft engine having a casing (10) defining a volume containing a rotary shaft (12) and a mixture of air and oil for processing, the de-oiler system comprising:
a rotary hollow axle (21) distinct from said shaft;
a de-oiler structure fastened to said axle and rotating together with said axle, said de-oiler structure (22) having an inlet first face (22a) communicating with said volume and an outlet second face (22b) connected to the passage provided in said hollow axle (21); and
transmission means (44) between said hollow axle (21) and said shaft (12):
said de-oiler system being **characterized in that** said transmission means (44) communicate to said hollow axle a speed of rotation V about its axis in such a manner that said speed of rotation V is greater than the speed of rotation v of said rotary shaft, whereby the droplets of oil contained in the air inside the casing are moved apart towards the casing of the inlet face of said de-oiler structure and the processed air is collected by said passage of the rotary hollow axle.

2. A de-oiler system according to claim 1, **characterized in that** the axes (XX', YY') of said hollow axle (21) and of said rotary shaft (12) are parallel.

3. A de-oiler system according to claim 2, **characterized in that** said transmission means comprise a first pinion (48) mounted on said hollow axle (21) co-operating with a second pinion (46) mounted on said rotary shaft (12).

4. A de-oiler system according to any one of claims 1 to 3, **characterized in that** said hollow axle (21) passes through the wall of said casing (10) and **in that** a labyrinth type gasket (40, 42) is interposed between said hollow axle and the wall of said casing.

5. A de-oiler system according to any one of claims 1 to 4, **characterized in that** it further includes bearings (24, 26) secured to the wall of the casing and in which said hollow axle (21) is mounted to rotate.

6. A de-oiler system according to any one of claims 1 to 5, **characterized in that** said de-oiler structure (22) is in the form of a cylindrical sleeve with its inlet face (22a) being its outer cylindrical face and its outlet face (22b) being its inner cylindrical face.

7. A de-oiler system according to any one of claims 1 to 6, **characterized in that** the de-oiler structure (22) is of the metal foam type.

8. An aircraft engine, **characterized in that** it includes a de-oiler system according to any one of claims 1 to 7, mounted in the enclosure associated with the front and/or rear bearings.

## Patentansprüche

1. Ölabscheidesystem (20) für ein Flugzeugtriebwerk, mit einem Gehäuse (10), das einen ein zu behandelndes Öl-Luft-Gemisch enthaltenden Raum begrenzt, sowie einer umlaufenden Welle (12), umfassend:
eine von der Welle getrennte umlaufende Hohlachse (21),
eine Ölabscheidestruktur, die an der Achse befestigt und mit der Achse drehfest verbunden ist, wobei die Ölabscheidestruktur (22) eine erste Eintrittsseite (22a) aufweist, welche mit dem genannten Raum in Verbindung steht, sowie eine zweite Austrittsseite (22b), welche mit dem in der Hohlachse (21) ausgebildeten Durchgang verbunden ist, und
Übertragungsmittel (44) zwischen der Hohlachse (21) und der Welle (12),
wobei das Ölabscheidesystem **dadurch gekennzeichnet ist, daß** die Übertragungsmittel (44) auf die Hohlachse eine Drehgeschwindigkeit V um ihre geometrische Achse übertragen, derart, daß die Drehgeschwindigkeit V höher als die Drehgeschwindigkeit v der umlaufenden Welle ist, wodurch die in der Luft innerhalb des Gehäuses enthaltenen Öltropfen in Richtung des Gehäuses von der Eintrittsseite der Ölabscheidestruktur entfernt werden und die behandelte Luft über den Durchgang der umlaufenden Hohlachse aufgefangen wird.

2. Ölabscheidesystem nach Anspruch 1, **dadurch gekennzeichnet, daß** die geometrischen Achsen (XX', YY') der Hohlachse (21) und der umlaufenden Welle (12) parallel verlaufen.

3. Ölabscheidesystem nach Anspruch 2, **dadurch gekennzeichnet, daß** die Übertragungsmittel ein an der Hohlachse (21) angebrachtes erstes Ritzel (48) umfassen, das mit einem an der umlaufenden Welle (12) angebrachten zweiten Ritzel (46) zusammenwirkt.

4. Ölabscheidesystem nach einem der Ansprüche 1 bis 3, **dadurch gekennzeichnet, daß** die Hohlachse (21) die Wand des Gehäuses (10) durchquert und daß eine Dichtung (40, 42) vom Typ Labyrinthdichtung zwischen der Hohlachse und der Wand des Gehäuses eingefügt ist.

5. Ölabscheidesystem nach einem der Ansprüche 1 bis 4, **dadurch gekennzeichnet, daß** es ferner mit der Wand des Gehäuses fest verbundene Lager (24, 26) umfaßt, in denen die Hohlachse (21) drehbar angebracht ist.

6. Ölabscheidesystem nach einem der Ansprüche 1 bis 5, **dadurch gekennzeichnet, daß** die Ölabscheidestruktur (22) die Form einer zylindrischen Hülse aufweist, deren Eintrittsseite (22a) ihre zylindrische Außenseite und deren Austrittsseite (22b) ihre zylindrische Innenseite ist.

7. Ölabscheidesystem nach einem der Ansprüche 1 bis 6, **dadurch gekennzeichnet, daß** die Ölabscheidestruktur (22) vom Typ mit Metallschaum ist.

8. Flugzeugtriebwerk, **dadurch gekennzeichnet, daß** es ein Ölabscheidesystem nach einem der Ansprüche 1 bis 7 umfaßt, das in dem den hinteren und/oder vorderen Lagern zugeordneten Raum angebracht ist.
